# EUROPÄISCHE PATENTANMELDUNG

(11) **EP 1 137 195 A2**
(43) Veröffentlichungstag der Anmeldung: **26.09.2001**
(21) Anmeldenummer: 01107254.3
(22) Anmeldetag: 23.03.2001
(51) Int. Cl.: H04B 7/04

(54) **Anordnung und Verfahren zur Übertragung sicherheitsrelevanter Daten über eine Funkstrecke**

(30) Priorität: 24.03.2000 DE 10014352
(71) Anmelder: Elan Schaltelemente GmbH & Co. KG, 35435 Wettenberg (DE)
(72) Erfinder: Ziegler, Olaf, 56276 Geilnau (DE)
(74) Vertreter: Stoffregen, Hans-Herbert, Dr. Dipl.-Phys.

(57) **Zusammenfassung**

Die Erfindung bezieht sich auf eine Anordnung (10) und ein Verfahren zur Übertragung sicherheitsrelevanter Daten über eine Funkstrecke (12, 46, 48, 52) zwischen zumindest zwei Stationen (14, 16), wobei jede Station (14, 16) einen Sender (18, 20) und einen Empfänger (22, 24), eine erste Antenne (30, 32), eine erste Auswerteeinrichtung (38, 40) sowie zumindest eine Umschalteinrichtung (26, 28) zur Verbindung der zumindest einen Antenne (30, 32) mit dem Sender und/oder Empfänger (22, 24) umfasst. Um eine Überwachung der Funkstrecke und/oder der Schnittstelle zwischen Antenne und Datenübertragungsmedium zu ermöglichen, ist vorgesehen, dass jede der Stationen (14, 16) eine zweite Antenne (34, 36) sowie eine zu der ersten Auswerteeinrichtung (38, 40) redundante zweite Auswerteeinrichtung (42, 44) aufweist, wobei die erste und zweite Antenne (30, 32; 34, 36) mittels der Umschalteinrichtung (26, 28) jeweils mit dem Sender (18, 20) und/oder dem Empfänger (22, 24) verbindbar ist und wobei dem Sender (18, 20) und/oder dem Empfänger (22, 24) jeweils die erste und/oder zweite Auswerteeinheit (38, 40; 42, 44) zugeordnet ist.

## Beschreibung

Die Erfindung bezieht sich auf eine Anordnung zur Übertragung sicherheitsrelevanter Daten über eine Funkstrecke zwischen zumindest zwei Stationen, vorzugsweise eines Automatiierungssystems, wobei jede Station einen Sender und einen Empfänger, eine erste Antenne, eine erste Auswerteeinrichtung sowie zumindest eine Umschalteinrichtung zur Verbindung der zumindest einen Antenne mit dem Sender und/oder Empfänger umfasst sowie auf ein Verfahren zur Übertragung sicherheitsrelevanter Daten über eine Funkstrecke.

Aus DE 196 27 464 A1 ist ein Prozessautomatisierungssystem bekannt, in dem Terminals in einer Bedien- und/oder Beobachtungsebene und Automatisierungseinrichtungen in einer prozessnahen Automatisierungsebene über Sende-/Empfangseinrichtungen über ein als Funkstrecke ausgebildetes Datenübertragungsmedium mit einem Leitrechner kommunizieren. Dabei ist vorgesehen, dass die Sende-/Empfangseinrichtungen sowie der Leitrechner zumindest teilweise redundant ausgeführt sind.

Bei der Übertragung von Daten mittels Funksignalen können durch Einstreuen von Signalen eines Fremdsenders Übertragungsfehler hervorgerufen werden, die bei der aus DE 196 27 464 A1 bekannten Anordnung nicht erkannt werden können.

Davon ausgehend liegt der vorliegenden Erfindung das Problem zu Grunde, eine Anordnung und ein Verfahren der zuvor genannten Art dahingehend weiterzubilden, dass auf einfache Weise eine direkte Überwachung der Funkstrecke und/oder der Schnittstelle zwischen Antenne und Datenübertragungsmedium ermöglicht wird.

Das Problem wird durch eine Anordnung erfindungsgemäß dadurch gelöst, dass jede der Stationen eine zweite Antenne sowie eine zu der ersten Auswerteeinrichtung redundante zweite Auswerteeinrichtung aufweisen, wobei die erste und zweite Antenne mittels der Umschalteinrichtung jeweils mit dem Sender und/oder dem Empfänger verbindbar ist und wobei dem Sender und dem Empfänger jeweils die erste und/oder zweite Auswerteeinheit zugeordnet ist.

Durch die erfindungsgemäße Anordnung wird der Vorteil erreicht, dass ein von der ersten Auswerteeinheit erzeugtes und über die beispielsweise als Sendeantenne geschaltete erste Antenne der ersten Station gesendetes sicherheitsrelevantes Signal von der zweiten als Empfangsantenne geschalteten Antenne der ersten Station rückgelesen werden kann und über den Empfänger der zweiten Auswerteeinheit der ersten Station zuführbar ist, so dass durch Vergleich des gesendeten sicherheitsrelevanten Signals mit dem rückgelesenen sicherheitsrelevanten Signal eine Überwachung der Funkstrecke, zumindest der Schnittstelle zwischen Antenne und Datenübertragungsmedium erfolgen kann. Insbesondere wird sichergestellt, dass bis zur Schnittstelle Antenne/Übertragungsmedium (Luft) keine Fehler aufgetreten sind.

In bevorzugter Ausführungsform sind die Antennen einer Station umschaltbar ausgebildet. Dies bedeutet, dass die erste und zweite Antenne sowohl als Empfangs- als auch als Sendeantenne schaltbar ist. Dadurch wird der Vorteil erreicht, dass in einem ersten Zyklus die erste Antenne als Sendeantenne geschaltet ist, die von der ersten Auswerteeinheit Signale sendet und beispielsweise in einem weiteren Zyklus die zweite Auswerteeinheit über Umschalteinrichtungen mit der zweiten Antenne verschaltet ist und sicherheitsrelevante Signale sendet, die sodann von der ersten Antenne empfangen und über den Empfänger der ersten Auswerteeinheit zugeführt werden.

Um Funklöcher zu kompensieren ist vorgesehen, dass die ersten und zweiten Antennen vorzugsweise im Abstand λ/4 angeordnet sind, wobei eine Umschaltung der Antennen vorgesehen ist. Wird in einem Telegramm eines sicherheitsrelevanten Signals eine zu hohe Bit-Fehlerrate detektiert, kann die als Sendeantenne geschaltete erste Antenne auf die zweite Antenne umgeschaltet werden. In gleicher Weise kann dies mit der Empfangsantenne geschehen.

Ein erstes Verfahren zur Übertragung sicherheitsrelevanter Daten zwischen zumindest zwei Stationen über eine Funkstrecke zeichnet sich durch die folgenden Verfahrensschritte aus:
- Aussenden der sicherheitsrelevanten Daten über eine als Sendeantenne wirkende erste Antenne einer ersten Station,
- Rücklesen der gesendeten Daten mittels einer als Empfangsantenne wirkenden zweiten Antenne der ersten Station,
- Vergleich der rückgelesenen Daten mit den gesendeten Daten.

Durch diese Verfahrensweise wird eine besonders schnelle und effektive Testmöglichkeit zur Verfügung gestellt, da jeder Station die Möglichkeit gegeben wird, Sende- und Empfangseinheiten sowie die Schnittstelle zwischen Antenne und Übertragungsmedium zu überprüfen.

Eine zweite Ausführungsform des Verfahrens, das einen eigenständigen erfinderischen Charakter aufweist, zeichnet sich dadurch aus, dass die von der ersten Station gesendeten Daten von einer als Empfangsantenne wirkenden ersten Antenne der zweiten Station empfangen und von der ersten Auswerteeinheit der zweiten Station ausgewertet werden, wobei die Signale an die zweite Auswerteeinheit der zweiten Station übertragen und von einer als Sendeantenne wirkenden zweiten Antenne der zweiten Station an eine als Empfangsantenne wirkende zweite Antenne der ersten Station zurückübertragen werden, wobei ein Vergleich der gesendeten und empfangenen Daten in der ersten Station erfolgt. Stimmen die gesendeten Daten mit den empfangenen Daten überein, so werden bei einer nächstfolgenden Datenübertragung von der ersten Station zu der zweiten Station die Daten freigegeben und für gültig erklärt.

Gemäß einer weiteren Verfahrensweise mit eigenerfinderischem Charakter ist vorgesehen, dass die von einer als Sendeantenne wirkende ersten Antenne der ersten Station gesendeten Daten von der ersten und zweiten Antenne als Empfangsantennen wirkenden Antennen der zweiten Station empfangen werden und dass die empfangenen Daten simultan durch die erste und zweite Auswerteeinheit der zweiten Station miteinander verglichen werden. Aus dieser Verfahrensweise resultiert eine direkte Redundanz der gesendeten Daten oder eine zeitlich versetzte Redundanz. Ist die zweite Station bereit, Daten simulatan zu empfangen und diese Daten direkt zu verarbeiten, ergibt sich eine direkte Redundanz der Daten.

Alternativ kann vorgesehen sein, dass ausgehend von der ersten Antenne (Sendeantenne) der ersten Station Daten mit einem zeitlichen Versatz zumindest zweimal gesendet werden, wobei ein erster Datensatz von der ersten Antenne (Empfangsantenne) der zweiten Station empfangen wird und ein zweiter Datensatz von der zweiten Antenne (Empfangsantenne) der zweiten Station empfangen wird, die nacheinander mittels der Umschalteinrichtung mit dem Empfänger verbunden sind. Die so empfangenen Daten liegen dann in der zweiten Station in Form einer seriellen Redundanz vor.

Insgesamt ist zu bemerken, dass sich alle beschriebenen Verfahren auf die Beschreibung eines einmaligen Vorgangs beziehen. In der Praxis können die beschriebenen Funktionen wechselseitig ausgeführt werden, so dass jede Station in der Lage ist, Daten zu senden und zu empfangen.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung eines den Zeichnungen zu entnehmenden bevorzugten Ausführungsbeispieles.

Es zeigen:
- Fig. 1: eine Anordnung zur Übertragung sicherheitsrelevanter Daten über eine Funkstrecke zwischen zumindest zwei Stationen gemäß einer ersten Verfahrensweise,
- Fig. 2: die Anordnung gemäß Fig. 1 nach einer zweiten Verfahrensweise und
- Fig. 3: die Anordnung gemäß Fig. 1 nach einer dritten Verfahrensweise.

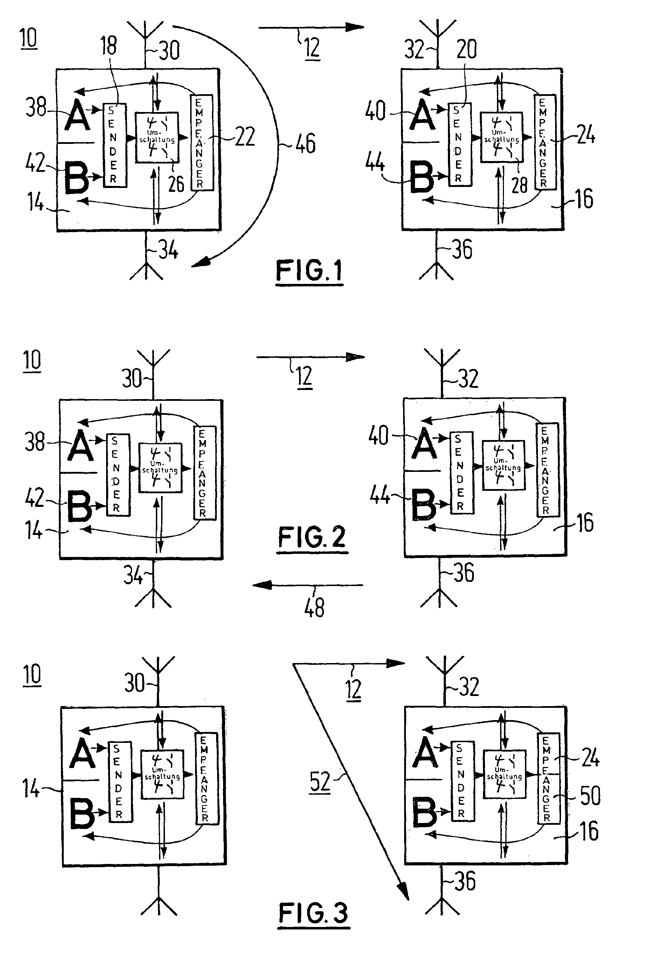

In Fig. 1 ist rein schematisch eine Anordnung 10 zur Übertragung von sicherheitsrelevanten Daten über eine Funkstrecke 12 zwischen zumindest zwei Stationen 14, 16 dargestellt. Die Stationen 14, 16 sind im Wesentlichen identisch aufgebaut und enthalten zumindest einen Sender 18, 20 sowie einen Empfänger 22, 24, die über eine Umschalteinrichtung 26, 28 jeweils mit einer ersten Antenne 30, 32 und/oder einer zweiten Antenne 34, 36 verbindbar sind.

Des Weiteren sind die Sender 18, 20 und die Empfänger 22, 24 jeweils mit einer ersten Auswerteeinheit 38, 40 und einer zweiten Auswerteeinheit 42, 44 verbunden. Die Auswerteeinheiten 38, 42 bzw. 40, 44 einer Station 14, 16 sind redundant aufgebaut.

Die jeweils erste Antenne 30, 32 der Station 14, 16 bzw. die zweite Antenne 34, 36 der ersten und zweiten Station 14, 16 kann über die Umschalteinrichtung 26, 18 entweder als Sendeantenne oder als Empfangsantenne geschaltet werden.

Erfindungsgemäß sind die Stationen 14, 16 mit zwei Antennen 30, 34 bzw. 32, 36 sowie mit den redundant ausgebildeten ersten und zweiten Auswerteeinrichtungen 38, 42 bzw. 40, 44 ausgebildet. Im Ausführungsbeispiel gemäß Fig. 1 ist die erste Antenne 30 der ersten Station 14 als Sendeantenne geschaltet und über die Umschalteinrichtung 26 mit dem Sender 18 verbunden, der beispielsweise sicherheitsgerichtete Daten von der Auswerteeinheit 38 erhält. Die sicherheitsgerichteten Daten werden anschließend über die erste Antenne 30 und die Funkstrecke 12 zu der als Empfangsantenne geschalteten ersten Antenne 32 der zweiten Station 16 übertragen. Gleichzeitig erfolgt eine Datenübertragung über eine Funkstrecke 46 zu der zweiten Antenne 34 der ersten Station 14, die erfindungsgemäß als Em-pfangsantenne geschaltet ist, d. h. die zweite Antenne 34 ist über die Umschalteinrichtung 26 mit dem Empfänger 22 verbunden. Die empfangenen Daten werden über den Empfänger 22 der zweiten Auswerteeinheit 42 zugeführt und anschließend mit den gesendeten Daten der Auswerteeinheit 38 verglichen. Durch diesen Vergleich kann somit festgestellt werden, ob die von der Sendeantenne 30 gesendeten Daten den in der Auswerteeinheit 38 gespeicherten Daten entsprechen. Insbesondere erfolgt eine Prüfung einer Schnittstelle zwischen der Sendeantenne 30 und dem Übertragungsmedium. Gemäß dieser Verfahrensweise können beispielsweise Einstreuungen von störenden Fremdsignalen oder Antennenfehler erfasst werden.

Selbstverständlich kann der gleiche Test auch bei der zweiten Station 16 durchgeführt werden, wobei die erste Antenne 32 als Sendeantenne und die zweite Antenne 36 als Empfangsantenne geschaltet werden, wobei die von der Sendeantenne 32 gesendeten sicherheitsrelevanten Daten von der gleichen Station empfangen werden und wobei ein Vergleich zwischen gesendeten und empfangenen Daten durch die ersten und zweiten Auswerteeinheiten 40, 44 durchgeführt wird.

Eine weitere Verfahrensweise sieht vor, dass in einem nächsten Zyklus die zweite Auswerteeinheit 42 mit dem Sender 18 verbunden ist, der wiederum über die Umschalteinrichtung 36 mit der zweiten Antenne 34 verschaltet ist, die in diesem Fall als Sendeantenne arbeitet. Die von der Sendeantenne 34 ausgehenden sicherheitsrelevanten Daten werden sodann von der ersten Antenne 30, die in diesem Fall als Empfangsantenne arbeitet und mit dem Empfänger 22 verbunden ist, empfangen und von der ersten Auswerteeinheit 38 ausgewertet, wonach ein Vergleich mit den gesendeten Daten erfolgen kann.

Um Funklöcher zu kompensieren, wird eine Umschaltung der Antennen 30, 34 bzw. 32, 36 ermöglicht. Wird beispielsweise in einem ersten Telegramm bei einer Datenübertragung eine zu hohe Bit-Fehlerrate detektiert, wird die als Sendeantenne geschaltete erste Antenne 30 auf die zweite Antenne 34 umgeschaltet. In gleicher Weise kann dies mit einer als Empfangsantenne geschalteten Antenne geschehen. Ferner sind die Antennen 30, 32, 34, 36 im Abstand λ/4 angeordnet.

In Fig. 2 ist rein schematisch eine zweite Verfahrensweise der Anordnung 10 zur Übertragung sicherheitsrelevanter Daten über die Funkstrecke 12 dargestellt. Hierbei ist vorgesehen, dass ausgehend von der Auswerteeinheit 38 Daten über die als Sendeantenne geschaltete erste Antenne 30 der ersten Station 14 ausgesendet werden, die über die Funkstrecke 12 von der als Empfangsantenne geschalteten ersten Antenne 32 der zweiten Station 16 empfangen und der ersten Auswerteeinheit 40 zugeleitet werden. In der zweiten Station 16 erfolgt eine Datenübertragung von der ersten Auswerteeinheit 40 zu der zweiten Auswerteeinheit 44, die sodann die empfangenen Daten an den Sender 20 und die als Sendeantenne geschaltete zweite Antenne 36 weiterleitet, so dass eine Datenübertragung über eine Funkstrecke 48 zu der als Empfangsantenne geschalteten zweiten Antenne 34 der ersten Station 14 erfolgt. Die über die Empfangsantenne 34 empfangenen Daten werden über die Umschalteinrichtung 26 dem Empfänger 22 und sodann der zweiten Auswerteeinheit 42 der ersten Station 14 zugeleitet und mit den gesendeten Daten verglichen. Stimmen die Daten überein, so werden diese im nächsten Datenübertragungsprotokoll von der ersten Station 14 an die zweite Station 16 freigegeben und für gültig erklärt.

Bei einer weiteren erfindungsgemäßen Verfahrensweise, die in Fig. 3 dargestellt ist, sind die erste Antenne 32 sowie die zweite Antenne 36 der zweiten Station 16 beide als Empfangsantennen ausgebildet, die von der ersten Antenne 30 ausgesendete Daten der ersten Station 14 empfangen. Dabei kann die zweite Station 16 zusätzlich zu dem Empfänger 24 einen weiteren Empfänger 50 enthalten, damit die von den Antennen 32, 66 empfangenen Daten simultan empfangen werden, so dass diese in den Auswerteeinheiten 40, 44 direkt verarbeitet werden können, um eine direkte Redundanz der Daten zu erzeugen. Bei einer Ausführungsform der zweiten Station 16 mit nur einem Empfänger ist vorgesehen, dass eine Datenübertragung von der ersten Station 14 mit einem zeitlichen Versatz zumindest zweimal hintereinander erfolgt, wobei die Daten in der zweiten Station 16 in Form einer seriellen Redundanz vorliegen. Nach Empfang der Daten werden diese miteinander verglichen, um festzustellen, ob eine Störung in den Übertragungsstrecken 12 bzw. 52 vorhanden ist. Alle zuvor beschriebenen Verfahren beziehen sich auf die Beshreibung eines einmaligen Datenübertragungsvorgangs. In der Praxis werden die beschriebenen Funktionen jedoch wechselseitig ausgeführt, so dass jede Station in der Lage ist, Daten zu senden und zu empfangen.

Selbstverständlich besteht auch die Möglichkeit, dass die Konfiguratin der ersten und zweiten Station 14, 16 während eines Betriebes je nach Anforderung an das oder die Datensignale geändert wird. Beispielsweise kann eine automatische Umschaltung die Effektivität der Funkstrecke hinsichtlich Nutzdatenübertragungsrate, Reichweite und/oder Verfügbarkeit erhöhen.

## Patentansprüche

1. Anordnung (10) zur Übertragung sicherheitsrelevanter Daten über eine Funkstrecke (12, 46, 48, 52) zwischen zumindest zwei Stationen (14, 16), wobei jede Station (14, 16) einen Sender (18, 20) und einen Empfänger (22, 24), eine erste Antenne (30, 32), eine erste Auswerteeinrichtung (38, 40) sowie zumindest eine Umschalteinrichtung (26, 28) zur Verbindung der zumindest einen Antenne (30, 32) mit dem Sender und/- oder Empfänger (22, 24) umfasst,
**dadurch gekennzeichnet,**
**dass** jede der Stationen (14, 16) eine zweite Antenne (34, 36) sowie eine zu der ersten Auswerteeinrichtung (38, 40) redundante zweite Auswerteeinrichtung (42, 44) aufweisen, wobei die erste und zweite Antenne (30, 32; 34, 36) mittels der Umschalteinrichtung (26, 28) jeweils mit dem Sender (18, 20) und/oder dem Empfänger (22, 24) verbindbar ist und wobei dem Sender (18, 20) und/oder dem Empfänger (22, 24) jeweils die erste und/oder zweite Auswerteeinheit (38, 40; 42, 44) zugeordnet ist.

2. Anordnung nach Anspruch 1,
**dadurch gekennzeichnet,**
**dass** die ersten und zweiten Antennen (30, 32; 34, 36) jeweils als Empfangs- und/oder als Sendeantenne umschaltbar sind.

3. Anordnung nach Anspruch 1 oder 2,
**dadurch gekennzeichnet,**
**dass** die ersten und zweiten Antennen (30, 32; 34, 36) vorzugweise im Abstand λ/4 angeordnet ist.

4. Anordnung nach zumindest einem der vorhergehenden Ansprüche,
**dadurch gekennzeichnet,**
**dass** die Stationen (14, 16) zwei Empfänger (24, 50) aufweisen und dass die erste und die zweite Antenne (32, 36) mit jeweils einem Empfänger (24, 50) verbunden und als Empfangsantennen geschaltet sind.

5. Anordnung nach zumindest einem der vorhergehenden Ansprüche,
**dadurch gekennzeichnet,**
**dass** die Stationen (14, 16) einen Vergleicher zum Vergleich der von den Auswerteeinrichtungen (38, 42; 40, 44) empfangenen und/oder gesendeten Daten aufweisen.

6. Verfahren zur Übertragung sicherheitsrelevanter Daten zwischen zumindest zwei Stationen (12, 14) über eine Funkstrecke (12, 48, 52), umfassend die folgenden Verfahrensschritte:
- Aussenden der sicherheitsrelevanten Daten über eine als Sendeantenne wirkende erste Antenne (30) einer ersten Station (14),
- Rücklesen der gesendeten Daten mit einer als Empfangsantenne wirkenden zweiten Antenne (34) der ersten Station (12),
- Vergleich der rückgelesenen Daten mit den gesendeten Daten.

7. Verfahren zur Übertragung sicherheitsrelevanter Daten zwischen zumindest zwei Stationen (12, 14) über eine Funkstrecke (48, 52),
**dadurch gekennzeichnet,**
**dass** die von der ersten Station (14) gesendeten Daten von einer als Empfangsantenne wirkenden ersten Antenne (32) der zweiten Station (16) empfangen und von der ersten Auswerteeinheit (40) der zweiten Station (16) ausgewertet werden, wobei die Daten an die zweite Auswerteeinheit (44) der zweiten Station (16) übertragen und von einer als Sendeantenne wirkenden zweiten Antenne der zweiten Station (16) an eine als Empfangsantenne (36) wirkenden zweite Antenne (34) der ersten Station (14) übertragen werden, wobei ein Vergleich der gesendeten und empfangenen Daten in der ersten Station (14) erfolgt.

8. Verfahren zur Übertragung sicherheitsrelevanter Daten zwischen zumindest zwei Stationen (12, 14) über eine Funkstrecke (12, 48, 52),
**dadurch gekennzeichnet,**
**dass** die von einer als Sendeantenne wirkenden ersten Antenne (32) der ersten Station (14) ausgesendeten Daten von ersten und zweiten als Empfangsantenne wirkenden Antenne der zweiten Station (16) empfangen werden und dass die empfangenen Daten simultan oder in zeitlicher Abfolge durch die erste und zweite Auswerteeinheit (40, 44) der zweiten Station (16) miteinander verglichen werden.
